# EUROPEAN PATENT APPLICATION

(11) **EP 4 817 864 A1**
(43) Date of publication of application: **07.10.2026**
(21) Application number: 25215358.0
(22) Date of filing: 12.11.2025
(51) Int. Cl.: B32B 5/18, B32B 7/12, B32B 25/08, B32B 27/08, B32B 27/10, B32B 27/28, B32B 27/30, B32B 27/32, B32B 27/36, B32B 29/00, B32B 3/04, B32B 7/06, B32B 27/06, H01M 10/658

(54) **THERMAL INSULATION PAD AND BATTERY PACK**

(30) Priority: 01.04.2025 CN 202510406958
(71) Applicant: Zhejiang Jinko Energy Storage Co., Ltd., Jiaxing, Zhejiang (CN)
(72) Inventor: SHI, Yanyan, Haining, Zhejiang (CN); ZHANG, Luhua, Haining, Zhejiang (CN); CHEN, Yuanhang, Haining, Zhejiang (CN); WANG, Xiaojie, Haining, Zhejiang (CN)
(74) Representative: Balder IP Law, S.L.

(57) **Abstract**

A thermal insulation pad includes a first attachment film layer, a second attachment film layer, and a first core layer. The first attachment film layer includes a first encapsulation portion and a first peripheral portion. The second attachment film layer includes a second encapsulation portion and a second peripheral portion connected to the first peripheral portion. A containment cavity is formed between the first and second encapsulation portions, and the first core layer is in the containment cavity. The first core layer includes a first thermal-insulation portion and a second thermal-insulation portion.

## Description

### TECHNICAL FIELD

Embodiments of the present disclosure relate to the field of energy storage technology, and particularly, to a thermal insulation pad and a battery pack.

### BACKGROUND

With the continuous development of energy storage technology, the application of energy storage equipment is becoming increasingly widespread. Energy storage equipment can store electrical energy output by power generation devices and deliver the stored electrical energy to power-consuming devices.

### SUMMARY

A thermal insulation pad includes a first attachment film layer, a second attachment film layer, and a first core layer. The first attachment film layer includes a first encapsulation portion and a first peripheral portion surrounding the first encapsulation portion. The second attachment film layer includes a second encapsulation portion and a second peripheral portion surrounding the second encapsulation portion. A containment cavity is formed between the second encapsulation portion and the first encapsulation portion. The first core layer is in the containment cavity.

In some embodiments, the first core layer includes a first thermal-insulation portion and a second thermal-insulation portion surrounding the first thermal-insulation portion. A minimum thickness of the first thermal-insulation portion is ***t1,*** and a maximum thermal conductivity of the first thermal-insulation portion in a thickness direction is ***λ1*.** A thickness of the second thermal-insulation portion is ***t2,*** and a thermal conductivity of the second thermal-insulation portion in the thickness direction is ***λ2*,** where ***t1*** is greater than ***t2*** and/or ***λ1*** is less than ***λ2*.**

Embodiments of the present disclosure further provide a battery pack. The battery pack includes a casing, a battery module, and the aforementioned thermal insulation pads. The casing has an accommodation cavity. The battery module is in the accommodation cavity and includes a plurality of battery cells arranged along a first direction, and two end plates clamping the plurality of battery cells therebetween. A respective thermal insulation pad is between two adjacent battery cells or between a respective battery cell and an end plate.

In the thermal insulation pad and battery pack provided by the embodiments of the present disclosure, a containment cavity is formed between the first and second attachment film layers of the insulation pad, housing the first core layer which plays the thermal insulation role. The second thermal-insulation portion of the first core layer surrounds the first thermal-insulation portion. Configuring the minimum thickness ***t1*** of the first thermal-insulation portion greater than the thickness ***t2*** of the second thermal-insulation portion, and/or configuring the maximum thermal conductivity ***λ1*** of the first thermal-insulation portion in the thickness direction less than the thermal conductivity ***λ2*** of the second thermal-insulation portion in the thickness direction can achieve a thermal insulation characteristic where the thermal insulation performance of the thermal insulation pad ascends along a direction from the peripheral region towards the central region. Such configuration can adapt to the temperature distribution characteristics on the surface of the battery cell, thereby enhancing the thermal insulation performance of the thermal insulation pad and reducing costs.

In some embodiments, the first thermal-insulation portion includes a first portion and a second portion surrounding the first portion. An edge of the second portion distant from the first portion is connected to the second thermal-insulation portion. A thickness of the first portion is ***ta,*** and a thermal conductivity of the first portion in the thickness direction is ***λa.*** A thickness of the second portion is ***tb,*** and a thermal conductivity of the second portion in the thickness direction is ***λb,*** where ***ta*** is greater than ***tb*** and/or ***λa*** is less than ***λb.*** Such configuration establishes a gradient distribution of insulation performance exceeding two levels in the core layer by forming the first portion and the second portion with different thermal insulation properties, which facilitates the full utilization of the insulation effects in different areas.

In some embodiments, a ratio of ***ta*** to ***tb*** ranges from 1.1 to 1.5, and a ratio of ***tb*** to ***t2*** ranges from 1.3 to 1.7. This allows for precise control over the insulation effects of different parts by managing the thickness ratios between them, thereby meeting the specific insulation requirements corresponding to different areas on the battery cell surface.

In some embodiments, an area of the first portion is ***S1,*** an area of the second portion is ***S2,*** and an area of the second thermal-insulation portion is ***S3.*** A ratio of ***S1*** to ***S2*** ranges from 0.11 to 0.20, and a ratio of ***S2*** to ***S3*** ranges from 1.1 to 2.0. The areas of the different parts of the core layer can correspond to regions with varying temperature distribution gradients on the battery cell surface, adapting to the temperatures in different areas of the cell surface.

In some embodiments, the thermal insulation pad further includes a second core layer. The second core layer is attached to a side of the first core layer close to the first attachment film layer. The second core layer includes a third thermal-insulation portion and a fourth thermal-insulation portion surrounding the third thermal-insulation portion. A thickness of the third thermal-insulation portion is ***t3,*** and a thermal conductivity of the third thermal-insulation portion in the thickness direction is ***λ3*.** A thickness of the fourth thermal-insulation portion is ***t4,*** and a thermal conductivity of the fourth thermal-insulation portion in the thickness direction is ***λ4,*** where ***t3*** is greater than ***t4*** and/or ***λ3*** is less than ***λ4*.** Combining the second core layer with the first core layer to form a composite thermal insulation core effectively enhances the overall thermal insulation performance of the core layer.

In some embodiments, the thermal insulation pad further includes a third core layer. The third core layer is attached to a side of the second core layer away from the first core layer. The third core layer includes a fifth thermal-insulation portion and a sixth thermal-insulation portion surrounding the fifth thermal-insulation portion. A thickness of the fifth thermal-insulation portion is ***t5,*** and a thermal conductivity of the fifth thermal-insulation portion in the thickness direction is ***λ5.*** A thickness of the sixth thermal-insulation portion is ***t6,*** and a thermal conductivity of the sixth thermal-insulation portion in the thickness direction is ***λ6*,** where ***t5*** is greater than ***t6*** and/or ***λ5*** is less than ***λ6*.** Forming a three-layer sandwich-structured thermal insulation core by incorporating the third core layer achieves an insulation structure where the thermal insulation performance transitions more uniformly from the edge regions to the central region. This adapts to the need for insulation against the gradually changing temperature on the battery cell surface.

In some embodiments, a projection of the third thermal-insulation portion onto the first core layer falls within the first thermal-insulation portion, and a projection of the fifth thermal-insulation portion onto the second core layer falls within the third thermal-insulation portion. Controlling the distribution areas of the thermal-insulation portions in different core layers allows for a milder change in the thermal insulation performance of the sandwich-structured core. This effectively enhances the overall insulation performance while meeting the varying insulation demands across different areas of the battery cell surface.

In some embodiments, the thermal insulation pad further includes a first adhesive layer and a second adhesive layer. The first adhesive layer is attached to a side of the first attachment film layer away from the second attachment film layer. The second adhesive layer is attached to a side of the second attachment film layer away from the first attachment film layer. A first release paper is disposed on a side of the first adhesive layer away from the first attachment film layer, and a second release paper is disposed on a side of the second adhesive layer away from the second attachment film layer. These adhesive layers conveniently adhere the thermal insulation pad onto the surface of the battery cell.

In some embodiments, the thermal insulation pad further includes a cushioning member. The cushioning member is disposed between the first attachment film layer and the first adhesive layer. A projection of the cushioning member onto the first attachment film layer surrounds the first encapsulation portion. The cushioning member provides a buffering effect, thereby protecting the thermal insulation core.

In some embodiments, the cushioning member is provided with a plurality of through-holes, and the plurality of through-holes are arranged to surround the center of the cushioning member. Providing these through-holes in the cushioning member offers space for deformation and contraction, which is beneficial for protecting the thermal insulation core.

In some embodiments, the cushioning member is provided with ribs. The ribs protrude from the edge of the cushioning member in a direction away from the center of the cushioning member. These ribs can effectively isolate the battery cell surface, protecting the blue film on the cell surface.

In some embodiments, the first core layer, the second core layer, and the third core layer are stitched into an integrity by threads. This stitching method ensures the structural stability of the different core layers during composition.

In some embodiments, ***t1*** is greater than or equal to 1.5 mm and less than or equal to 5 mm, and ***λ1*** is greater than or equal to 0.01 W/m·K and less than or equal to 0.08 W/m·K. Controlling the thickness and the maximum thermal conductivity of the first thermal-insulation portion in the thickness direction saves material usage and fully utilizes the material's inherent insulation properties.

### BRIEF DESCRIPTION OF THE DRAWINGS

One or more embodiments are illustrated through the figures in the corresponding drawings. These exemplary illustrations do not constitute limitations on the embodiments. Elements having similar reference numerals in the drawings represent similar elements. The figures in the accompanying drawings do not constitute a scale limitation unless otherwise stated.
FIG. 1 is a schematic perspective view of a thermal insulation pad according to some embodiments of the present disclosure;
FIG. 2 is a schematic exploded view of the thermal insulation pad according to some embodiments of the present disclosure;
FIG. 3 is a front view of a first core layer in the thermal insulation pad according to some embodiments of the present disclosure;
FIG. 4 is a top view of the first core layer in the thermal insulation pad according to some embodiments of the present disclosure;
FIG. 5 is a top view of the first core layer in the thermal insulation pad according to some embodiments of the present disclosure;
FIG. 6 is a schematic exploded view of the thermal insulation pad according to some embodiments of the present disclosure;
FIG. 7 is a front view of a second core layer in the thermal insulation pad according to some embodiments of the present disclosure;
FIG. 8 is a top view of the second core layer in the thermal insulation pad according to some embodiments of the present disclosure;
FIG. 9 is a schematic exploded view of the thermal insulation pad according to some embodiments of the present disclosure;
FIG. 10 is a front view of a third core layer in the thermal insulation pad according to some embodiments of the present disclosure;
FIG. 11 is a top view of the third core layer in the thermal insulation pad according to some embodiments of the present disclosure;
FIG. 12 is a schematic exploded view of a thermal insulation core in the thermal insulation pad according to some embodiments of the present disclosure;
FIG. 13 is a schematic perspective view of a cushioning member in the thermal insulation pad according to some embodiments of the present disclosure;
FIG. 14 is a schematic diagram illustrating the deformation of a local area of the cushioning member under load in the thermal insulation pad according to some embodiments of the present disclosure; and
FIG. 15 is a front view of a battery cell according to the prior art.

### DETAILED DESCRIPTION OF THE EMBODIMENTS

To make the objectives, technical solutions, and advantages of the embodiments of the present disclosure clearer, various implementations of the present disclosure will be described in detail below with reference to the accompanying drawings. However, those of ordinary skill in the art may understand that in various embodiments of the present disclosure, many technical details have been presented to facilitate a better understanding of the present disclosure by the reader. However, even without these technical details and the various variations and modifications based on the following embodiments, the technical solution claimed in the present disclosure can still be achieved. The division of the following embodiments is for descriptive convenience only and should not be construed as limiting the specific implementation of the present disclosure. The various embodiments may be combined and referenced mutually unless such combination leads to contradiction.

Unless otherwise defined, all technical and scientific terms used herein have the same meanings as commonly understood by one of ordinary skill in the technical field of the present disclosure. The terminology used herein is for the purpose of describing specific embodiments only and is not intended to limit the present disclosure. The terms "include," "include," "have," and any variations thereof used in the specification, claims, and drawings of the present disclosure are intended to cover non-exclusive inclusion.

In the description of the embodiments of the present disclosure, unless otherwise explicitly specified and defined, the technical terms such as "installation", "connection", etc. should be understood in a broad sense. For example, "connection" may refer to fixed connection, detachable connection, or integral connection; mechanical connection or electrical connection; direct connection, or indirect connection through an intermediary. It may further refer to the internal connectivity between two components or the interaction between two components. For those of ordinary skill in the art, the specific meanings of the above terms in embodiments of the present disclosure should be understood according to the specific circumstances.

With the continuous advancement of renewable energy technologies, the adoption of renewable energy sources in social life and industrial production has been steadily increasing. The application of energy storage equipment is also expanding. In practice, depending on the application scenario, energy storage equipment can be implemented at various scales: container-level, cluster-level, and battery pack (or "pack") level. Battery cells, also known as individual battery units, serve as efficient energy storage components and are widely used across different types of energy storage equipment. Multiple cells can be connected in series or parallel to form a battery module, which is then packaged into an integrated unit. An energy storage device may incorporate one or multiple such battery modules. A specific number of modules can be grouped into a battery cluster for centralized management and control. Multiple battery modules can be encapsulated within a casing of a certain size to form a battery pack, or be encapsulated in large containers to form containerized energy storage systems. These multiple battery modules are collectively managed and controlled via a battery management system (BMS) and a thermal management system (TMS).

During charging and discharging, chemical reactions occur inside the cells, generating significant heat and causing the temperature of the battery module to rise. Particularly as cell capacity and energy density continue to increase, the heat generated during operation is also growing. To prevent heat concentration between cells due to thermal transfer, thermal insulation pads are typically applied to the surfaces of cells within a battery module to hinder heat transfer. These insulation pads contain a thermal insulation core made of substances with low thermal conductivity, providing effective thermal insulation while also possessing flame-retardant properties. A respective insulation pad can be placed between two adjacent cells within the module or between the outermost cell and the casing, so as to block heat transfer paths from the cells to surrounding areas. Furthermore, in the event of thermal runaway in some cells, the insulation pads act as flame retardant, preventing the spread of thermal runaway to other cells and avoiding chain reactions.

However, current thermal insulation pads generally use a thermal insulation core with uniform thickness and consistent properties across the entire surface. The thickness of the thermal insulation core is typically designed for the highest expected temperature, which can lead to high material costs. Moreover, as the thermal insulation core is not designed according to the intrinsic heat generation characteristics of the cells themselves, the thermal insulation efficiency of these pads is often poor, resulting in low material utilization.

To enhance the thermal insulation performance of thermal insulation pads, some embodiments of the present disclosure provide an improved thermal insulation pad. The thermal insulation pad according to the present disclosure optimizes the thermal insulation core based on the inherent temperature gradient distribution during cell operation - specifically, the characteristic that temperature gradually decreases from the central region towards the edges. This achieves a gradient in the thermal insulation performance of the thermal insulation pad. Consequently, the thermal insulation pad achieves graded thermal insulation performance, enhancing thermal safety and improving insulation efficiency. This enables the thermal insulation pad to better adapt to complex operating conditions and prolongs the product's service life. The graded thermal insulation performance of the thermal insulation pad allows for full utilization of the material characteristics and advantages, thereby reducing costs.

It should be noted that during operation of the battery module, the temperature is highest in the central region of the battery cell surface and gradually decreases towards the edges, forming a temperature gradient that descends from the central region to the peripheral regions. Furthermore, there are distinct temperature differences between various regions, resulting in a hotter central region and cooler edge regions. Some regions also exhibit smooth temperature transitions. Providing a thermal insulation core with variable thickness, variable material properties, or both variable thickness and material properties in the thermal insulation pad, the thermal insulation pad can develop a graded thermal insulation characteristic that corresponds to the temperature distribution pattern on the cell surface. The thermal insulation performance of the thermal insulation core increases from the edge regions towards the central region, allowing it to meet thermal insulation requirements while fully leveraging the insulation capabilities of different regions of the thermal insulation core.

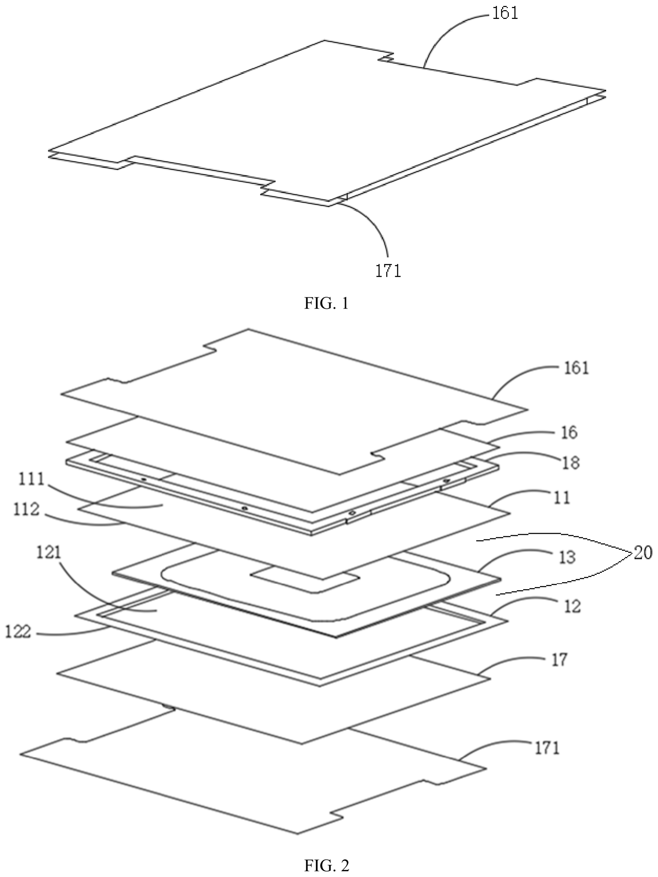

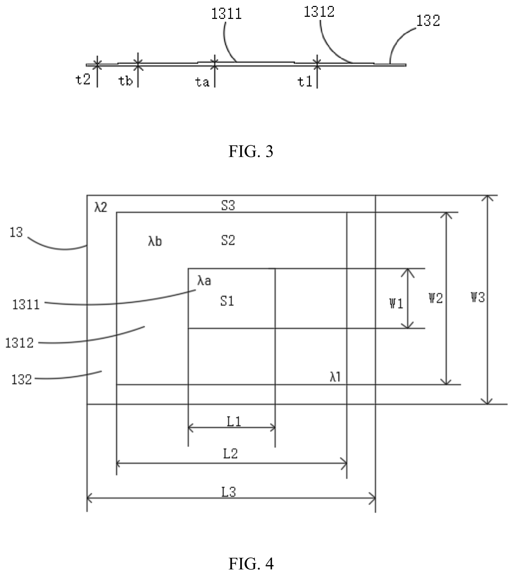

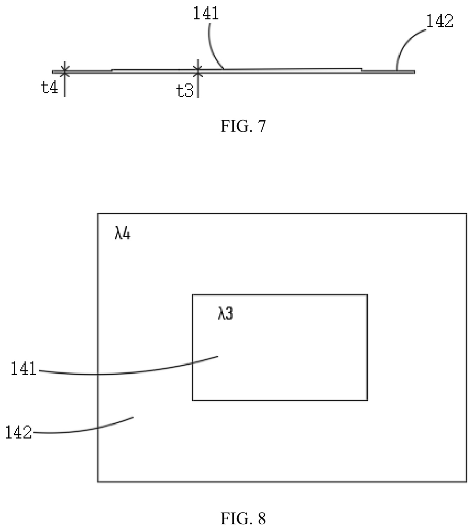

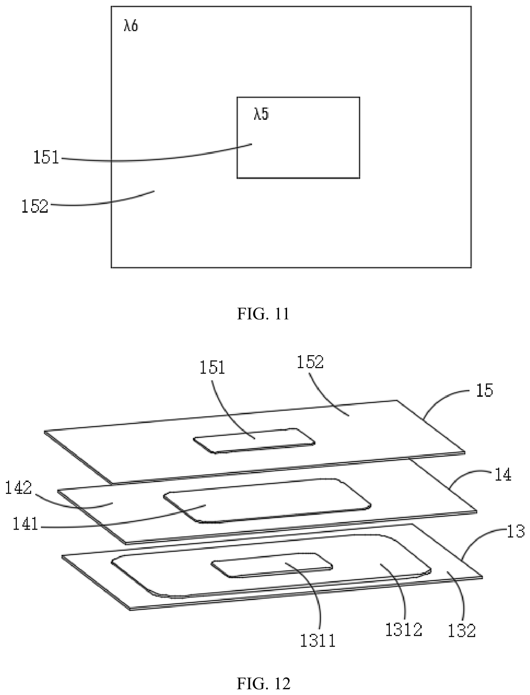

The structure of the thermal insulation pad provided by some embodiments of the present disclosure is described below with reference to FIG. 1 to FIG. 14. The thermal insulation pad is configured to be attached to a surface of a battery cell for thermal insulation.

As shown in FIG. 1 to FIG. 14, the thermal insulation pad provided by some embodiments of the present disclosure includes a first attachment film layer 11, a second attachment film layer 12, and a first core layer 13. The first attachment film layer 11 includes a first encapsulation portion 111 and a first peripheral portion 112 surrounding the first encapsulation portion 111. The second attachment film layer 12 includes a second encapsulation portion 121 and a second peripheral portion 122 surrounding the second encapsulation portion 121. A containment cavity 20 is formed between the second encapsulation portion 121 and the first encapsulation portion 111, with the second peripheral portion 122 connected to the first peripheral portion 112. The first core layer 13 is in the containment cavity 20. The first core layer 13 includes a first thermal-insulation portion 131 and a second thermal-insulation portion 132 surrounding the first thermal-insulation portion 131. A minimum thickness of the first thermal-insulation portion 131 is ***t1**,* and a maximum thermal conductivity of the first thermal-insulation portion 131 in a thickness direction is ***λ1***. A thickness of the second thermal-insulation portion 132 is ***t2,*** and a thermal conductivity of the second thermal-insulation portion 132 in the thickness direction is ***λ2***, where ***t1*** is greater than ***t2*** and/or ***λ1*** is less than ***λ2*.**

The attachment film layers serve as outer encapsulation of the thermal insulation pad. These attachment film layers can be secured to the surface of the battery cell using various methods, such as full-surface adhesion, partial adhesion, magnetic attachment, or strapping. The attachment film layers consist of opposing first attachment film layer 11 and second attachment film layer 12, which together define the containment cavity 20 housing the thermal insulation core , thereby encapsulating the thermal insulation core. The encapsulation portion of each attachment film layer corresponds to the region encapsulating the thermal insulation core, while the peripheral portion corresponds to the connecting region of the two attachment film layers. The peripheral portions of the two attachment film layers can be integrated through methods like thermal pressing, adhesive bonding, or stitching. For instance, the attachment film layers may be made of heat-sealable film to enable integration via thermal pressing. The heat-sealable films may feature recesses. During assembly, the peripheral regions of the heat-sealable films are thermally pressed together, leaving flash edges. Thus, the thermal insulation core is fully encapsulated and intimately contacts the inner surfaces of the heat-sealable films.

The first core layer 13 constitutes the thermal insulation core of the thermal insulation pad. It is fabricated from materials with low thermal conductivity, effectively hindering heat transfer. The first core layer 13 includes distinct heat thermal-insulation portions. These heat thermal-insulation portions can be formed using: a same heat insulation material with varying thicknesses, different heat insulation materials with identical thicknesses, or different insulation materials with different thicknesses, so as to exhibit varying thermal insulation characteristics across different regions of the thermal insulation pad. Since thermal resistance is directly proportional to thickness and inversely proportional to thermal conductivity, configuring the first thermal-insulation portion 131 with a minimum thickness ***t1*** greater than the thickness ***t2*** of the second thermal-insulation portion 132, and/or with a maximum thermal conductivity ***λ1*** in the thickness direction less than the thermal conductivity ***λ*2** of the second thermal-insulation portion 132, enables the first thermal-insulation portion 131 located in the central region to provide superior insulation performance compared to the second thermal-insulation portion 132 located in the edge region, so that the thermal insulation pad can adapt to the varying insulation demands corresponding to the temperature gradients across the battery cell surface. Thermal conductivity is defined as the amount of heat transferred in one second through a one-meter thickness of a material, across a one-square-meter area, under a temperature difference of one degree Kelvin between the two surfaces. It serves as an indicator of a material's heat conduction capability and reflects its insulation characteristics. The unit of thermal conductivity is W/m·K (Watts per meter-Kelvin).

The first thermal-insulation portion 131 is positioned in the central region of the first core layer 13 and contacts the central region of the battery cell surface. The second thermal-insulation portion 132 is located in the peripheral region of the first core layer 13 and contacts the peripheral region of the battery cell surface. Here, the central region refers to the region extending outward from the center within a certain range, while the peripheral region refers to the outer region surrounding the central region. Different thermal-insulation portions of the first core layer 13 provide targeted thermal insulation for their corresponding regions on the battery cell surface. In practical applications, both the first core layer 13 and the thermal insulation pad may have various outer contours. For a rectangular first core layer or insulation pad, the center point thereof is located at the intersection of the two diagonals. For a circular first core layer or insulation pad, the center point is the circle's center. For an irregular first core layer or insulation pad, the center point can be determined based on the geometric centroid thereof. Furthermore, the outer contour of the first core layer 13 may either match or differ from that of the insulation pad.

In the thermal insulation pad provided by embodiments of the present disclosure, a containment cavity 20 is formed between the first and second encapsulation films, housing the first core layer 13 which serves as the thermal insulation component. The second thermal-insulation portion 132 of the first core layer 13 surrounds the first thermal-insulation portion 131. Configuring the minimum thickness ***t1*** of the first thermal-insulation portion 131 to be greater than the thickness ***t2*** of the second thermal-insulation portion 132, and/or configuring the maximum thermal conductivity ***λ1*** of the first thermal-insulation portion 131 in the thickness direction to be less than the thermal conductivity ***λ*2** of the second thermal-insulation portion 132 in the thickness direction can achieve a thermal insulation characteristic where the thermal insulation performance of the thermal insulation pad ascends along a direction from the peripheral region towards the central region. Such configuration can adapt to the temperature distribution characteristics on the surface of the battery cell, thereby enhancing the thermal insulation performance of the thermal insulation pad and reducing costs.

In some embodiments, the first thermal-insulation portion 131 includes a first portion 1311 and a second portion 1312 surrounding the first portion 1311. An edge of the second portion 1312 distant from the first portion 1311 is connected to the second thermal-insulation portion 132. A thickness of the first portion 1311 is ***ta,*** and a thermal conductivity of the first portion 1311 in the thickness direction is ***λ*a.** A thickness of the second portion 1312 is ***tb,*** and a thermal conductivity of the second portion 1312 in the thickness direction is ***λb,*** where ***ta*** is greater than ***tb*** and/or ***λa*** is less than ***λb.***

The first portion 1311 is located in the central region of the first thermal-insulation portion 131, and the second portion 1312 is located in the peripheral region of the first thermal-insulation portion 131 and connects with the second thermal-insulation portion 132. This configuration establishes a three-level gradient in thermal insulation performance from the central region towards the peripheral region within the first core layer 13. Specifically, the first portion 1311, the second portion 1312, and the second thermal-insulation portion 132 collectively form this graded insulation structure. The superior insulation performance of the first portion 1311 compared to the second portion 1312 is achieved through its greater thickness (ta *> **tb***), lower thermal conductivity (***λa** < **λb***), or a combination of both. This multi-level gradient design allows the first core layer 13 to more precisely match the decreasing temperature profile from the central region to the peripheral region of the battery cell surface. Moreover, this refined structure better accommodates gradual temperature variations across the cell surface, ensuring closer alignment between the insulation performance of different pad regions and the local thermal conditions. For larger battery cell surfaces, implementing more-than-two-level gradient enables the thermal insulation pad to effectively meet the diverse thermal insulation requirements across different regions.

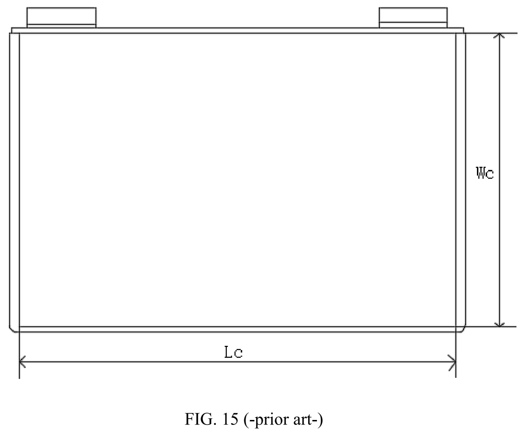

In some embodiments, the thermal insulation core is designed to have a varying thickness. For example, the thermal insulation core is made of aerogel which is encapsulated within the containment cavity formed by heat-sealable films. The upper and lower heat-sealable films are made of polyethylene terephthalate (PET ) material. Their peripheral edges are thermally pressed together, leaving flash edges. Thus, the thermal insulation core is fully encapsulated and intimately contacts the inner surfaces of the heat-sealable films. The thermal insulation core may be composed of three aerogel pieces of varying thicknesses, with the thickness progressively decreasing along a direction from the central region towards the peripheral region of the core. The thermal insulation core is configured in a rectangular shape, with different thermal-insulation portions divided accordingly as rectangles. Based on the gradient characteristics of the battery cell's heat generation, the dimensional relationships regarding thickness, length, and width among the three aerogel pieces are designed as follows: L1, L2, and L3 represent the boundary length dimensions (in mm) of the first portion 1311, second portion 1312, and second thermal-insulation portion 132, respectively; W1, W2, and W3 represent the boundary width dimensions (in mm) of the first portion 1311, second portion 1312, and second thermal-insulation portion 132, respectively. The dimensional relationships can be designed as: ***ta** : **tb** : **t2** =* 4 : 3 : 2; L1 : L2 : L3 = 3 : 8 : 10; W1 : W2 : W3 = 2 : 6 : 7. FIG. 15 schematically illustrates the surface structure of a battery cell, showing its key dimensions where ***Lc*** represents the length and ***Wc*** the width of the cell surface. Based on the gradient characteristics of the battery cell's heat generation, the thickness ***ta*** of the first portion 1311 in the thermal insulation core ranges from 1.5 mm to 5 mm; the boundary length L3 of the second thermal-insulation portion 132 ranges from 0.92 ***Lc*** to 0.95 ***Lc*;** and the boundary width W3 thereof ranges from 0.9 ***Wc*** to 0.97 ***Wc.***

Additionally, to ensure uniform contact of portions of the thermal insulation core with varying core thicknesses with the battery cell, the attachment film layers may be configured to have a concave curved structure. In other words, the attachment film layers may have a thickness distribution characteristic complementary to that of the thermal insulation core, ensuring consistent overall thickness of the thermal insulation pad. Furthermore, the outer surface of the attachment film layers may also feature a slight curvature to accommodate expansion and deformation of the battery cell. This helps reduce compressive stress on the thermal insulation core, thereby extending its service life.

In some embodiments, the thermal insulation core is made of three different materials: a nano thermal insulation mat, aerogel, and ceramic silicone foam. These three thermal insulation materials are arranged at different regions such that their thermal conductivity in the thickness direction sequentially decreases along a direction from the peripheral region towards the central region. Based on the gradient distribution characteristics of the battery cell's heat generation, the thicknesses of the three thermal insulation materials can be determined experimentally according to their respective thermal conductivities. The thicknesses of these three materials may either decrease progressively along a direction from the central region towards the peripheral region of the thermal insulation core or remain consistent. The minimum thermal conductivity ranges from 0.01 W/m·K to 0.08 W/m·K.

In practice, the first core layer 13 can also be designed with a gradient distribution of thermal insulation performance exceeding three levels from the central region to the peripheral region, to better adapt to the heat distribution pattern on the battery cell surface. Alternatively, the gradient distribution can be limited to three levels or fewer to reduce the cost. Furthermore, protruding tabs may be formed around the thermal insulation pad. Multiple protruding tabs are arranged encircling the center of the thermal insulation core, forming spaced protruding structures along the thermal insulation pad's periphery. Each protruding tab may be designed with different tooth-shaped profiles, such as triangular, rectangular, or trapezoidal protrusions. This design achieves contact with the peripheral region of the battery cell surface while conserving the use of thermal insulation material in the peripheral region. It also enables a distribution characteristic where the area of thermal insulation material in the peripheral region is less than that in the central region, meeting the varying thermal insulation demands across different regions of the battery cell surface. Additionally, the gaps between the protruding tabs provide reserved space for the expansion of the battery cell surface, accommodating the swelling deformation of the battery cell and reducing the compressive force exerted on the thermal insulation pad.

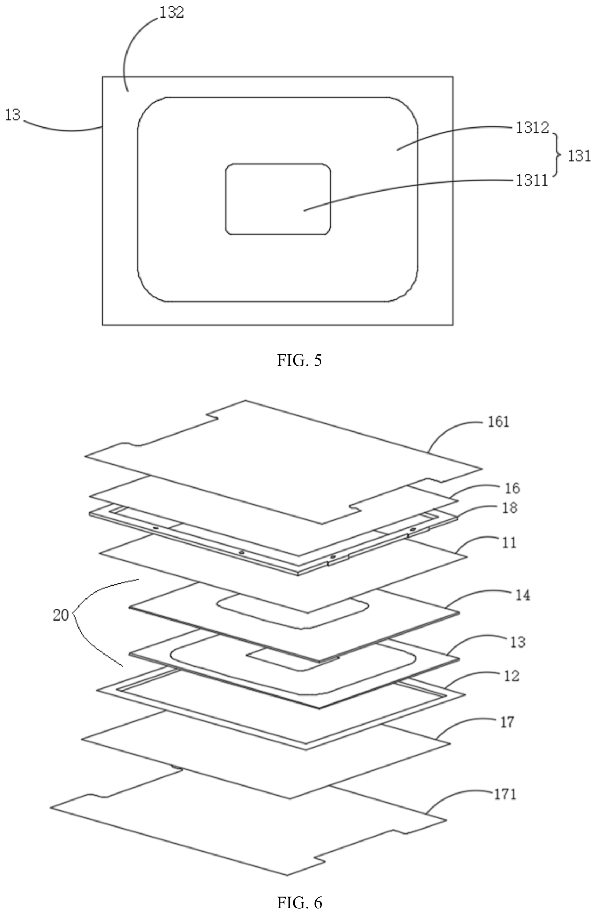

As shown in FIG. 5, the junctions between different portions of the thermal insulation core may be designed with fillet radii to mitigate sudden thermal stress changes, achieving a thermal performance gradient that better aligns with the battery cell's heat generation pattern. The fillet radius at the junction between the first portion 1311 and the second portion 1312 may range from 2 mm to 8 mm, such as 2 mm, 4 mm, 6 mm, or 8 mm. The fillet radius at the junction between the second portion 1312 and the second thermal-insulation portion 132 may range from 10 mm to 30 mm, such as 10 mm, 13 mm, 16 mm, 19 mm, 20 mm, 23 mm, 26 mm, 29 mm, or 30 mm.

Additionally, a ratio of the thickness ***ta*** of the first portion 1311 to the thickness ***tb*** of the second portion 1312 may range from 1.1 to 1.5, and a ratio of the thickness ***tb*** of the second portion 1312 to the thickness *t2* of the second thermal-insulation portion 132 may range from 1.3 to 1.7.

Controlling the thicknesses of different portions can optimize the insulation performance of different portions. The thermal resistance of the thermal insulation core is directly proportional to its thickness, and the thicknesses of different portions of the thermal insulation core progressively increase along a direction from the peripheral region towards the central region. Specifically, the thickness ***ta*** of the first portion 1311 in the central region is greater than the thickness ***tb*** of the second portion 1312 in the intermediate transition region, which in turn is greater than the thickness ***t2*** of the second thermal-insulation portion 132 in the peripheral region.

The ratio of ***ta*** to ***tb*** may range from 1.1 to 1.5, for example, 1.1, 1.2, 1.3, 1.4, or 1.5. The ratio of ***tb*** to ***t2*** may range from 1.3 to 1.7, for example, 1.3, 1.4, 1.5, 1.6, or 1.7. Controlling these thickness ratios between different portions of the first core layer 13 to be within proper ranges can fully utilize the material's insulation properties in different regions and adequately meet the varying thermal insulation requirements across different regions of the battery cell surface.

In some embodiments, the area of the first portion 1311 is ***S1,*** the area of the second portion 1312 is ***S2,*** and the area of the second thermal-insulation portion 132 is ***S3**.* A ratio of ***S1*** to ***S2*** ranges from 0.11 to 0.20, and a ratio of ***S2*** to ***S3*** ranges from 1.1 to 2.0.

Different regions of the first core layer 13 correspond to different regions on the battery cell surface. Controlling the area of each region of the first core layer 13 can control the coverage of the corresponding region on the cell surface, so that regions of the thermal insulation pad with varying thermal performance align properly with the corresponding temperature regions of the cell surface. Controlling the area of the first portion 1311 to be smaller than that of the second portion 1312 allows the thermal insulation material in the first portion to fully utilize its performance, as it directly faces the higher-temperature central region of the cell surface. Controlling the area of the second portion 1312 to be larger than that of the second thermal-insulation portion 132 allows a sufficient coverage over the intermediate transition region of the thermal insulation core, effectively hindering heat transfer paths across the cell surface. Controlling the area of the second thermal-insulation portion 132 to a smaller size reduces material usage in the peripheral region while still providing adequate thermal insulation.

In practical applications, the ratio of ***S1*** to ***S2*** ranges from 0.11 to 0.20, for example: 0.11, 0.13, 0.15, 0.17, 0.19, or 0.20. The ratio of ***S2*** to ***S3*** ranges from 1.1 to 2.0, such as: 1.1, 1.3, 1.5, 1.7, 1.9, or 2.0.

As shown in FIG. 6, the thermal insulation pad further includes a second core layer 14. The second core layer 14 is attached to a side of the first core layer 13 close to the first attachment film layer 11. The second core layer 14 includes a third thermal-insulation portion 141 and a fourth thermal-insulation portion 142 surrounding the third thermal-insulation portion 141. A thickness of the third thermal-insulation portion 141 is ***t3,*** and a thermal conductivity of the third thermal-insulation portion 141 in the thickness direction is ***λ3.*** A thickness of the fourth thermal-insulation portion 142 is ***t4,*** and a thermal conductivity of the fourth thermal-insulation portion 142 in the thickness direction is ***λ4,*** where ***t3*** is greater than ***t4*** and/or ***λ3*** is less than ***λ4*.**

Similar to the first core layer 13, the second core layer 14 is also made of materials with low thermal conductivity. It can be laminated with the first core layer 13 to form a composite thermal insulation structure, thereby enhancing the thermal insulation performance of the core layer. The second core layer 14 includes multiple portions with varying thicknesses and/or different thermal conductivities in the thickness direction, creating differentiated thermal insulation properties across its different regions. The third thermal-insulation portion 141 is located in the central region of the second core layer 14, and the fourth thermal-insulation portion 142 is located in the peripheral region of the second core layer 14. Configuring the thickness ***t3*** of the third thermal-insulation portion 141 to be greater than the thickness ***t4*** of the fourth thermal-insulation portion 142, and/or configuring the thermal conductivity ***λ3*** of the third thermal-insulation portion 141 to be less than the thermal conductivity ***λ4*** of the fourth thermal-insulation portion 142 in the thickness direction enhances the thermal insulation performance of the central region of the second core layer 14. This configuration strengthens the thermal insulation effect in the central region of the thermal insulation pad, effectively hindering heat transfer between adjacent battery cells.

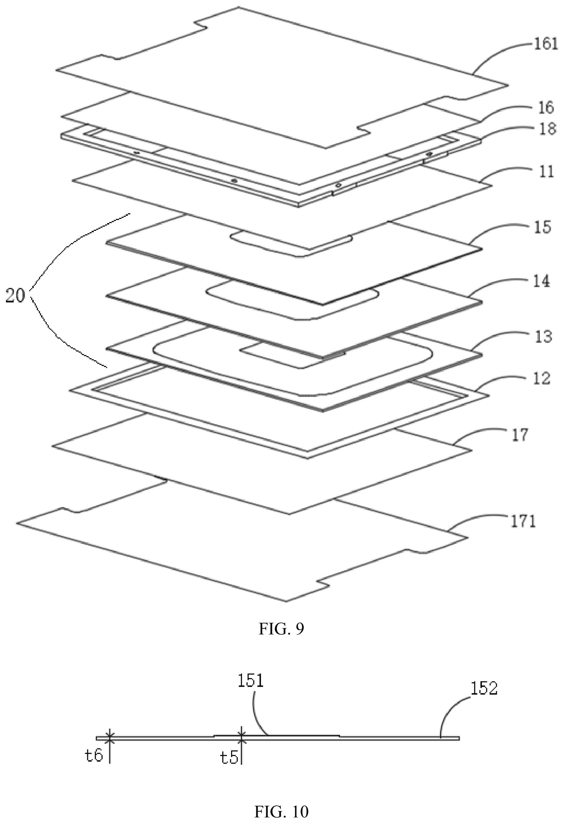

As shown in FIG. 9, the thermal insulation pad further includes a third core layer 15. This third core layer 15 is attached to a side of the second core layer 14 away from the first core layer 13. The third core layer 15 includes a fifth thermal-insulation portion 151 and a sixth thermal-insulation portion 152 surrounding the fifth thermal-insulation portion 151. A thickness of the fifth thermal-insulation portion 151 is ***t5*** and a thermal conductivity of the fifth thermal-insulation portion 151 in the thickness direction is ***λ5.*** A thickness of the sixth thermal-insulation portion 152 is ***t6*** and a thermal conductivity of the sixth thermal-insulation portion 152 in the thickness direction is ***λ6*,** where ***t5*** is greater than ***t6*** and/or ***λ5*** is less than ***λ6*.**

The third core layer 15 and the first core layer 13 are attached to opposite sides of the second core layer 14, sandwiching the second core layer 14 to form a three-layer sandwich structure. Such configuration effectively enhances the thermal insulation performance of the thermal insulation pad. The third core layer 15 includes multiple portions with varying thicknesses and/or different thermal conductivities in the thickness direction, creating differentiated thermal insulation properties across its different regions. The fifth thermal-insulation portion 151 is located in the central region of the third core layer 15, and the sixth thermal-insulation portion 152 is located in the peripheral region of the third core layer 15. Configuring the thickness ***t5*** of the fifth thermal-insulation portion 151 to be greater than the thickness ***t6*** of the sixth thermal-insulation portion 152, and/or configuring the thermal conductivity ***λ5*** of the fifth thermal-insulation portion 151 to be less than the thermal conductivity ***λ6*** of the sixth thermal-insulation portion 152 in the thickness direction enhances the thermal insulation performance of the central region of the third core layer 15. This configuration strengthens the thermal insulation effect in the central region of the thermal insulation pad, effectively hindering heat transfer between adjacent battery cells.

In practical applications, the composite thermal insulation core can be formed by combining three or more core layers in a staggered configuration. The specific dimensions of the composite thermal insulation core, including thickness, length, and width, can be determined through experiments. To achieve a gradient distribution of thermal insulation performance in the multi-layer composite thermal insulation core, each individual core layer can be designed to have a multi-level gradient in thermal conductivity, decreasing from the central region towards the peripheral region. The multi-layer thermal insulation core, which exhibits a sandwich structure, is housed within the containment cavity formed by the attachment film layers. The peripheral regions of these attachment film layers can be thermally pressed together, leaving flash edges. Thus, the thermal insulation core is fully encapsulated and intimately contacts the inner surfaces of the attachment film layers.

In some embodiments, a projection of the third thermal-insulation portion 141 onto the first core layer 13 falls within the first thermal-insulation portion 131, and a projection of the fifth thermal-insulation portion 151 onto the second core layer 14 falls within the third thermal-insulation portion 141.

Different core layers can be configured with their respective thermal-insulation portions in a gradually transitioning manner. That is, the boundaries between different thermal-insulation portions in multiple core layers can be progressively offset either away from or towards the central position. Such configuration creates a more uniform transition in the overall thermal insulation performance of the thermal insulation pad from the peripheral region to the central region, effectively adapting to the gradually changing temperature profile on the battery cell surface. Specifically, a central core layer with a larger area can be oriented towards the battery cell surface with a higher maximum temperature, while a central core layer with a small area can be oriented towards the battery cell surface with a low maximum temperature.

Alternatively, in practice, the third core layer 15 may be designed to have the same gradient distribution of thermal insulation performance as the first core layer 13. That is, the distribution patterns of the different thermal-insulation portions in the third core layer 15 and the first core layer 13 can be mirror images of each other across the second core layer 14, creating a symmetrical configuration on two opposite sides of the second core layer 14. Such design ensures adequate thermal insulation performance between two adjacent battery cells operating at similar temperature levels.

As shown in FIG. 9, the thermal insulation pad further includes a first adhesive layer 16 and a second adhesive layer 17. The first adhesive layer 16 is attached to a side of the first attachment film layer 11 away from the second attachment film layer 12. The second adhesive layer 17 is attached to a side of the second attachment film layer 12 away from the first attachment film layer 11. A first release paper 161 is disposed on a side of the first adhesive layer 16 away from the first attachment film layer 11, and a second release paper 171 is disposed on a side of the second adhesive layer 17 away from the second attachment film layer 12.

This configuration provides adhesive layers on the outer sides of the attachment film layers for bonding, along with release papers that protect these adhesive layers before use. The thermal insulation pad can be securely attached to the battery cell surface via these adhesive layers. In practical applications, to install the thermal insulation pad, one simply needs to peel off the outermost release papers, exposing the adhesive layers. This allows the thermal insulation pad to be bonded directly to the battery cell surface. The release papers are designed to have easy-tear features, that is, tear tabs protruding beyond the adhesive layer for easy grasping. These tear tabs facilitate the removal of the release papers from both sides of the thermal insulation pad to reveal the adhesive layers ready for attachment to the cell surface.

As shown in FIG. 9, the thermal insulation pad further includes a cushioning member 18. The cushioning member 18 is disposed between the first attachment film layer 11 and the first adhesive layer 16. A projection of the cushioning member 18 onto the first attachment film layer 11 surrounds the first encapsulation portion 111.

The cushioning member 18 is deformable, enabling it to provide a buffering effect within the thermal insulation pad. The cushioning member 18 can be manufactured from materials such as natural rubber, synthetic rubber, or foam materials. For instance, the cushioning member 18 may be a foam pad.

The cushioning member 18 can take the form of a cushioning frame or cushioning strip. When placed around the periphery of the thermal insulation core, these cushioning strips can rebound under certain pressure while maintaining excellent flame-retardant properties. Its primary functions include absorbing and releasing the expansion forces generated during the battery cell's charging and discharging cycles, thereby protecting the cell itself. Moreover, the cushioning member 18 protects the thermal insulation core, preventing damage caused by compression. The incorporation of the cushioning member 18 allows for a reduction in the thickness of the thermal insulation core, eliminating the need for excessive thickness to achieve buffering effects. This contributes to cost reduction.

In practical applications, the cushioning member 18 may be installed only on two sides of the thermal insulation core. This configuration maintains the buffering effect while minimizing impact on the thermal insulation coverage area, thereby increasing the effective thermal insulation area of the thermal insulation core. Such design expands the thermal insulation and flame-retardant area of the thermal insulation pad, effectively delaying the onset of thermal runaway in the cell.

When configured as a rectangular frame, the cushioning member 18 additionally secures the position of the thermal insulation core, ensuring it remains reliably contained within the containment cavity and preventing displacement due to cell expansion. This guarantees normal operation of the thermal insulation core. The rectangular frame may be made of silicone material, with chamfered corners. This foam cushioning frame can be attached to the flash edges of the heat-sealable films. Double-sided adhesive is selected for the outer adhesive layers of the heat-sealable films, applied to both the upper and lower films. The release papers on the outer sides of the adhesive layers feature symmetrically arranged tear tabs to facilitate automated equipment handling.

In some embodiments, the cushioning member 18 may be provided with a plurality of through-holes 181, and the plurality of through-holes 181 are arranged to surround the center of the cushioning member 18.

These through-holes 181 can be distributed along the extending direction of the cushioning member 18, and located at different positions. The provision of the through-holes 181 creates space for deformation and contraction of the cushioning member 18. This facilitates localized deformation and contraction, ensuring the overall buffering effect of the cushioning member 18.

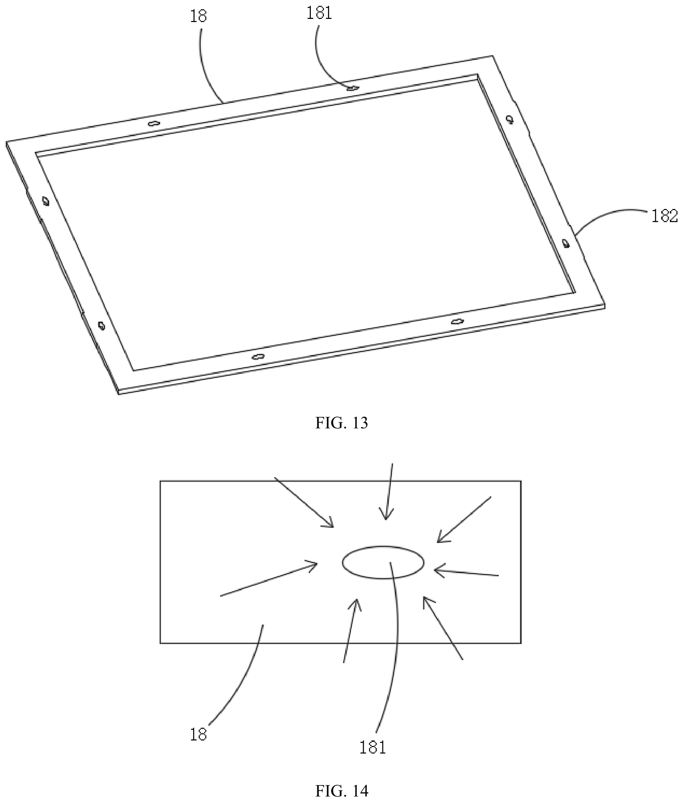

As shown in FIG. 13, the cushioning member 18 is configured as a rectangular frame, with voids formed at different positions along the frame. As shown in FIG. 14, following the principle of least resistance, the cushioning member 18 deforms by collapsing towards the centers of the holes when compressed under force. This mechanism helps prevent excessive pressure on the thermal insulation core.

Moreover, the cushioning member 18 is provided with ribs 182. The ribs 182 protrude from the edge of the cushioning member 18 in a direction away from the center of the cushioning member 18.

These ribs 182 can be arranged on one edge, both edges, or all around the periphery of the cushioning member 18. These ribs 182 extend the isolation region of the cushioning member 18, effectively isolating the battery cell surface. By incorporating these protruding ribs along the edges, the cushioning member 18 can effectively separate from the cell surface, thereby protecting the blue film on the cell surface and preventing damage to it.

In some embodiments, the first core layer 13, the second core layer 14, and the third core layer 15 are stitched into an integrity by threads.

In other words, the composite thermal insulation core formed by different core layers can be quilted into a mesh-like pattern. The mesh-like structure restrains the combined thermal insulation core, making it less prone to separation at the joints. This enhances the overall stiffness and strength of the thermal insulation pad and ensures the stability of its thermal insulation performance.

In some embodiments, the minimum thickness ***t1*** of the first thermal-insulation portion 131 is greater than or equal to 1.5 mm and less than or equal to 5 mm, while its maximum thermal conductivity ***λ1*** in the thickness direction is greater than or equal to 0.01 W/m·K and less than or equal to 0.08 W/m·K.

The thickness of the first thermal-insulation portion 131 directly affects the insulation performance of the central region of the first core layer 13. Controlling this thickness can prevent the central region of the first core layer 13 from being too thin to provide adequate insulation, while also avoid excessive thickness that would waste material and compromise the efficient utilization of the material's insulation properties. The minimum thickness ***t1*** of the first thermal-insulation portion 131 may range from 1.5 mm to 5 mm, for example, 1.5 mm, 2 mm, 2.5 mm, 3 mm, 3.5 mm, 4 mm, 4.5 mm, or 5 mm.

Similarly, the maximum thermal conductivity ***λ1*** of the first thermal-insulation portion 131 in the thickness direction influences the insulation performance of the central region. Controlling ***λ1*** can prevent the selection of materials with excessively low thermal conductivity that would drive up costs, while also avoid materials with overly high conductivity that would compromise insulation effectiveness. The maximum thermal conductivity ***λ1*** may range from 0.01 W/m·K to 0.08 W/m·K, for example, 0.01 W/m·K, 0.02 W/m·K, 0.04 W/m·K, 0.06 W/m·K, or 0.08 W/m·K.

In practical applications, the thermal insulation core can be made from materials such as aerogel, nano insulation mats, ceramic silicone foam, mica, microcellular polypropylene (MPP), silicone, and other insulating materials. The heat-sealable films can be made from materials like PET or Polycarbonate (PC). The cushioning foam can be silicone, ceramic silicone foam, MPP, rubber, etc. The adhesive layers typically use adhesives such as 3M tape or pressure-sensitive adhesives. The various materials can be combined using methods like adhesive bonding or thermal pressing.

The aerogel thermal insulation core possesses low thermal conductivity along with excellent flame-retardant properties, enabling it to effectively block chain reactions caused by thermal runaway in battery cells. When a cell undergoes thermal runaway, its surface temperature rises sharply. The thermal insulation core can delay the transfer of heat to adjacent cells, thereby effectively preventing thermal propagation. This means the thermal insulation pad can efficiently prevent heat from transferring from a runaway cell to unaffected cells. Furthermore, when a thermally runaway cell ignites, the thermal insulation pad can isolate the burning cell from other stable cells, preventing the spread of thermal runaway between stacked cells.

Additionally, aerogel features extremely high porosity and specific surface area, outstanding chemical stability and flame retardancy, as well as light weight. It provides effective flame retardation and contributes to lightweight design goals.

The different attachment film layers can be pre-formed into bag structures. After placing the thermal insulation core inside, they are sealed by thermal pressing. This method improves the encapsulation efficiency of the thermal insulation core, enhances the stability of the insulation pad, and accommodates customized requirements under various scenarios. Alternatively, the different attachment film layers can be pre-positioned on two opposite sides of the thermal insulation core, with at least one attachment film layer featuring a recessed cavity to locate and secure the thermal insulation core. The attachment film layers are then thermally pressed together for fixation. Another approach involves using a single film layer folded over to form two opposing attachment film layers that sandwich the thermal insulation core in between. The edges beyond the fold line are then thermally pressed and sealed, completing the fixation of the thermal insulation core.

The attachment film layers may be made of polymers, including but not limited to PET film, polyimide (PI) film, polyvinyl chloride (PVC) film, and polypropylene (PP) film. These materials exhibit low thermal conductivity, which enhances the thermal insulation performance of the whole thermal insulation pad. Moreover, the self-adhesive property of the attachment film layers ensures effective encapsulation of the thermal insulation core, contributing to structural stability, low cost, and light weight of the insulation pad. This is conducive to achieving lightweight battery modules.

Some embodiments of the present disclosure further provide a battery pack, which includes a casing, a battery module, and the aforementioned thermal insulation pad. The casing has an accommodation cavity. The battery module is in the accommodation cavity and includes a plurality of battery cells arranged along a first direction, and two end plates clamping the plurality of battery cells therebetween. A respective thermal insulation pad is between two adjacent battery cells or between a respective battery cell and an end plate.

When positioned between two adjacent battery cells, the insulation pad provides thermal isolation, preventing rapid heat propagation from a thermally runaway cell to neighboring cells. This enhances the safety of the battery pack, and also avoids electrical contact and potential short circuits between adjacent cells, thereby ensuring reliable operation. When placed between an edge cell and an end plate, the insulation pad acts as a thermal barrier between the cell and the inner wall of the casing. This prevents direct heat transfer from the cell to the casing, avoiding excessive temperature rise within the battery pack. The variation in insulation performance across different regions of the thermal insulation pad ensures effective thermal management corresponding to different regions of the cell surface, further enhancing the safety of the battery pack.

Furthermore, the projection of the thermal insulation pad onto the cell surface falls within the cell surface. The length of the cell surface facing the insulation pad is ***Lc,*** and the width of the cell surface facing the insulation pad is ***Wc.*** The length of the first core layer 13 of the insulation pad is L1, and the width thereof is W1, where L1 is greater than or equal to 0.92***Lc*** and less than or equal to *0.95**Lc**,* and W1 is greater than or equal to 0.9***Wc*** and less than or equal to 0.97***Wc.***

By configuring the dimensions of the thermal insulation core of the insulation pad to be close to those of the cell surface, the insulation pad can provide effective thermal protection across the entire cell surface. Further, such configuration allows for optimal utilization of the insulation material's performance and avoids material waste.

Those of ordinary skill in the art can understand that the aforementioned embodiments are specific examples for implementing the present disclosure. In practical applications, various modifications can be made to them in form and detail without deviating from the scope of the present disclosure.

## Claims

1. A thermal insulation pad, configured to be attached to a surface of a battery cell for thermal insulation, wherein the thermal insulation pad comprises:
a first attachment film layer (11), including a first encapsulation portion (111) and a first peripheral portion (112) surrounding the first encapsulation portion (111);
a second attachment film layer (12), including a second encapsulation portion (121) and a second peripheral portion (122) surrounding the second encapsulation portion (121), wherein a containment cavity (20) is formed between the second encapsulation portion (121) and the first encapsulation portion (111); and
a first core layer (13) in the containment cavity (20).

2. The thermal insulation pad according to claim 1, wherein the first core layer (13) includes a first thermal-insulation portion (131) and a second thermal-insulation portion (132) surrounding the first thermal-insulation portion (131), a minimum thickness of the first thermal-insulation portion (131) is ***t1**,* and a maximum thermal conductivity of the first thermal-insulation portion (131) in a thickness direction is ***λ1*,** wherein a thickness of the second thermal-insulation portion (132) is ***t2,*** and a thermal conductivity of the second thermal-insulation portion (132) in the thickness direction is ***λ2*,** wherein ***t1*** is greater than ***t2*** and/or ***λ1*** is less than ***λ2*.**

3. The thermal insulation pad according to claim 2, wherein the first thermal-insulation portion (131) includes a first portion (1311) and a second portion (1312) surrounding the first portion (1311), an edge of the second portion (1312) distant from the first portion (1311) is connected to the second thermal-insulation portion (132), a thickness of the first portion (1311) is ***ta,*** and a thermal conductivity of the first portion (1311) in the thickness direction is ***λa,*** a thickness of the second portion (1312) is ***tb***, and a thermal conductivity of the second portion (1312) in the thickness direction is ***λb,*** wherein ***ta*** is greater than ***tb*** and/or ***λa*** is less than ***λb.***

4. The thermal insulation pad according to claim 3, wherein a ratio of ***ta*** to ***tb*** ranges from 1.1 to 1.5, and a ratio of ***tb*** to ***t2*** ranges from 1.3 to 1.7.

5. The thermal insulation pad according to claim 4, wherein an area of the first portion (1311) is ***S1,*** an area of the second portion (1312) is ***S2,*** and an area of the second thermal-insulation portion (132) is ***S3***, wherein a ratio of ***S1*** to ***S2*** ranges from 0.11 to 0.20, and a ratio of ***S2*** to ***S3*** ranges from 1.1 to 2.0.

6. The thermal insulation pad according to claim 2, further comprising a second core layer (14), wherein the second core layer (14) is attached to a side of the first core layer (13) close to the first attachment film layer (11), wherein the second core layer (14) includes a third thermal-insulation portion (141) and a fourth thermal-insulation portion (142) surrounding the third thermal-insulation portion (141), wherein a thickness of the third thermal-insulation portion (141) is ***t3,*** and a thermal conductivity of the third thermal-insulation portion (141) in the thickness direction is ***λ3,*** a thickness of the fourth thermal-insulation portion (142) is ***t4,*** and a thermal conductivity of the fourth thermal-insulation portion (142) in the thickness direction is ***λ4,*** wherein ***t3*** is greater than ***t4*** and/or ***λ3*** is less than ***λ4*.**

7. The thermal insulation pad according to claim 6, further comprising a third core layer (15), wherein the third core layer (15) is attached to a side of the second core layer (14) away from the first core layer (13), wherein the third core layer (15) includes a fifth thermal-insulation portion (151) and a sixth thermal-insulation portion (152) surrounding the fifth thermal-insulation portion (151), wherein a thickness of the fifth thermal-insulation portion (151) is *t5,* and a thermal conductivity of the fifth thermal-insulation portion (151) in the thickness direction is ***λ5,*** a thickness of the sixth thermal-insulation portion (152) is ***t6,*** and a thermal conductivity of the sixth thermal-insulation portion (152) in the thickness direction is ***λ6*,** wherein ***t5*** is greater than ***t6*** and/or ***λ5*** is less than ***λ6*.**

8. The thermal insulation pad according to claim 7, wherein a projection of the third thermal-insulation portion (141) onto the first core layer (13) falls within the first thermal-insulation portion (131), and a projection of the fifth thermal-insulation portion (151) onto the second core layer (14) falls within the third thermal-insulation portion (141).

9. The thermal insulation pad according to any one of claims 1 to 8, further comprising a first adhesive layer (16), a second adhesive layer (17), a first release paper (161), and a second release paper (171), wherein the first adhesive layer (16) is attached to a side of the first attachment film layer (11) away from the second attachment film layer (12), and the second adhesive layer (17) is attached to a side of the second attachment film layer (12) away from the first attachment film layer (11), wherein the first release paper (161) is on a side of the first adhesive layer (16) away from the first attachment film layer (11), and the second release paper (171) is on a side of the second adhesive layer (17) away from the second attachment film layer (12).

10. The thermal insulation pad according to claim 9, further comprising a cushioning member (18), wherein the cushioning member (18) is between the first attachment film layer (11) and the first adhesive layer (16), with a projection of the cushioning member (18) onto the first attachment film layer (11) surrounding the first encapsulation portion (111).

11. The thermal insulation pad according to claim 10, wherein the cushioning member (18) is provided with a plurality of through-holes (181), and the plurality of through-holes (181) are configured to surround a center of the cushioning member (18).

12. The thermal insulation pad according to claim 10, wherein the cushioning member (18) is provided with ribs (182) protruding from an edge of the cushioning member (18) in a direction away from a center of the cushioning member (18).

13. The thermal insulation pad according to claim 2, wherein ***t1*** is greater than or equal to 1.5 mm and less than or equal to 5 mm, and ***λ1*** is greater than or equal to 0.01 W/m·K and less than or equal to 0.08 W/m·K.

14. A battery pack, comprising:
a casing, having an accommodation cavity;
a battery module, housed in the accommodation cavity and including a plurality of battery cells arranged along a first direction, and two end plates clamping the plurality of battery cells therebetween; and
at least one thermal insulation pad according to any one of claims 1 to 13, a respective one of which is between two adjacent battery cells or between a respective battery cell and an end plate.

15. The battery pack according to claim 14, wherein
a projection of the respective thermal insulation pad onto a surface of a respective battery cell falls within the surface of the respective battery cell, a length of the surface of the respective battery cell facing the respective thermal insulation pad is ***Lc*** and a width of the surface of the respective battery cell is ***Wc,*** a length of the first core layer (13) of the respective thermal insulation pad is L1 and a width of the first core layer (13) of the respective thermal insulation pad is W1, wherein L1 is greater than or equal to 0.92***Lc*** and less than or equal to 0.95***Lc***, and W1 is greater than or equal to *0.9**Wc*** and less than or equal to 0.97***Wc**.*
